# EUROPEAN PATENT SPECIFICATION

(11) **EP 4 546 188 B1**
(45) Date of publication and mention of the grant of the patent: **25.11.2026**
(21) Application number: 23845087.8
(22) Date of filing: 06.06.2023
(51) Int. Cl.: G06F 21/57, H04L 9/40

(54) **VULNERABILITY ANALYSIS METHOD AND APPARATUS, AND DEVICE AND COMPUTER-READABLE STORAGE MEDIUM**
VERFAHREN UND VORRICHTUNG ZUR ANALYSE VON SCHWACHSTELLEN SOWIE VORRICHTUNG UND COMPUTERLESBARES SPEICHERMEDIUM
PROCÉDÉ ET APPAREIL D'ANALYSE DE VULNÉRABILITÉ, DISPOSITIF, ET SUPPORT D'ENREGISTREMENT LISIBLE PAR ORDINATEUR

(30) Priority: 25.07.2022 CN 202210877922; 31.08.2022 CN 202211055558
(43) Date of publication of application: 30.04.2025
(73) Proprietor: Huawei Cloud Computing Technologies Co., Ltd., Guiyang, Guizhou, 550025 (CN)
(72) Inventor: LI, Lin, Guiyang, Guizhou 550025 (CN); LIANG, Guangtai, Guiyang, Guizhou 550025 (CN); SHAN, Bingjie, Guiyang, Guizhou 550025 (CN); ZHU, Liuchuan, Guiyang, Guizhou 550025 (CN)
(74) Representative: Goddar, Heinz J.
(86) International application number: PCT/CN2023/098487
(87) International publication number: WO 2024/021874

(56) References cited:
- EP-A1- 3 693 874
- EP-A1- 3 971 751
- CN-A- 106 446 691
- CN-A- 108 763 928
- CN-A- 111 310 178
- CN-A- 112 579 476
- US-A1- 2020 202 005
- US-A1- 2020 202 005
- US-A1- 2022 083 667
- US-B2- 10 691 808

## Description

This application claims priority to Chinese Patent Application No. 202210877922.5, filed on July 25, 2022 and entitled "VULNERABILITY IMPACT PACKAGE INTELLIGENT ANALYSIS METHOD, APPARATUS, AND DEVICE, AND MEDIUM", and this application claims priority to Chinese Patent Application No. 202211055558.0, filed on August 31, 2022 and entitled "VULNERABILITY ANALYSIS METHOD, APPARATUS, AND DEVICE, AND COMPUTER-READABLE STORAGE MEDIUM".

### TECHNICAL FIELD

This application relates to the field of computer technologies, and in particular, to a vulnerability analysis method and apparatus, a device, and a computer-readable storage medium.

### BACKGROUND

A vulnerability is a security defect of a computer system. The vulnerability affects security of the computer system. Therefore, a discovered vulnerability needs to be fixed to reduce a risk brought by the vulnerability. Before the vulnerability is fixed, determining a software package affected by the vulnerability in the computer system is an indispensable step. The software package affected by the vulnerability is determined, so that a fixing object fixes the software package affected by the vulnerability. Therefore, a vulnerability analysis method is needed to determine the software package affected by the vulnerability.

In a related technology, a classification model that can determine a correspondence between a vulnerability and a software package is trained based on an existing correspondence between a vulnerability and a software package in a training set, and then a software package affected by the vulnerability is determined based on description information of a to-be-analyzed vulnerability by using the classification model.

However, the correspondence that is between a vulnerability and a software package and that is included in the training set is limited, and the classification model obtained through training is applicable only to determining software that is affected by the vulnerability and that is included in the training set. Therefore, universality is poor, and analysis accuracy is not high.

US20220083667A1 discloses an open source security vulnerability prioritization scheme.

EP3693874A1 discloses methods for making continuous vulnerability management for modern applications.

EP3971751A1 discloses a technology to perform real-time and online identification and prioritization of vulnerabilities of components of software applications.

### SUMMARY

The invention is defined by the appended claims. This application provides a vulnerability analysis method and apparatus to resolve a problem provided in a related technology. The invention is set out in the appended set of claims. In the following, parts of the description and drawings referring to embodiments which are not covered by the claims are not presented as embodiments of the invention, but as examples useful for understanding the invention. Technical solutions are as follows.

According to a first aspect, a vulnerability analysis method is provided. The method includes: An analysis device obtains software environment information of a vulnerability, where the software environment information is used to describe software affected by the vulnerability; the analysis device obtains n candidate software packages through searching based on the software environment information, where n is an integer greater than or equal to 1; and the analysis device performs same-source extension on the n candidate software packages to obtain a plurality of recommended software packages, where a quantity of the plurality of recommended software packages is greater than n, and the recommended software package is used to assist an annotation object in determining an impact range of the vulnerability.

According to the vulnerability analysis method provided in this embodiment of this application, the candidate software packages are obtained through searching based on the software environment information. For a case in which a training set does not include a vulnerability in a correspondence in a related technology, a corresponding candidate software package that is affected can also be found, and universality is high. In addition, after the candidate software packages are determined, the same-source extension is further performed on the candidate software packages, to obtain the larger quantity of recommended software packages, to improve a recall rate of vulnerability analysis.

In a possible implementation, the obtaining software environment information of a vulnerability includes: obtaining vulnerability description information of the vulnerability; identifying a software entity in the vulnerability description information; and extracting a context of the software entity from the vulnerability description information, and obtaining the software environment information based on the extracted context. The software environment information is determined based on the context of the software entity to perform searching, so that more content is used for searching, and a result obtained through searching is more comprehensive.

In a possible implementation, the obtaining n candidate software packages through searching based on the software environment information includes: searching, based on the software environment information, a database including description information of a plurality of software packages, to obtain m initial software packages related to the vulnerability, where m is an integer greater than n; and selecting n initial software packages from the m initial software packages based on the software environment information as the n candidate software packages. The initial software packages obtained through searching are filtered, so that the candidate software packages obtained through filtering are more accurate.

In a possible implementation, the selecting n initial software packages from the m initial software packages based on the software environment information includes: sorting the m initial software packages based on software description information of each initial software package and the software environment information, to obtain a sorting result, where a ranking of any initial software package in the sorting result indicates a relevance degree between the any initial software package and the vulnerability; and selecting the n initial software packages from the m initial software packages based on the sorting result. The initial software packages are filtered based on relevance degrees between the initial software packages and the vulnerability, and all candidate software packages obtained through filtering are software packages that are highly relevant to the vulnerability and that are affected by the vulnerability, to improve search accuracy.

In a possible implementation, the method further includes: obtaining a software package filtering model; and the selecting n initial software packages from the m initial software packages based on the software environment information includes: invoking the software package filtering model to select the n initial software packages from the m initial software packages based on the software environment information. The software package filtering model is used to filter the initial software packages, and an operation is more convenient.

In a possible implementation, the performing same-source extension on the n candidate software packages to obtain a plurality of recommended software packages includes: clustering the plurality of software packages based on the description information of the software packages in the database, to obtain at least one target software cluster, where the target software cluster is a software cluster including the candidate software package, and the target software cluster further includes a software package that has a same source as the candidate software package; and using a candidate software package in the at least one target software cluster and a same-source software package that meets a condition as the recommended software packages. When the vulnerability affects the candidate software package, the software package that has the same source as the candidate software package also has a probability of being affected by the vulnerability. Through the same-source extension, a range of recommended software packages affected by the vulnerability is further expanded, and the recall rate of vulnerability analysis is ensured.

In a possible implementation, the clustering the plurality of software packages based on the description information of the software packages in the database, to obtain at least one target software cluster includes: obtaining a description vector of each software package in the plurality of software packages based on the description information of the software packages in the database; clustering the plurality of software packages based on the description vector of each software package to obtain a plurality of initial software clusters; calculating a code similarity between software packages included in each initial software cluster in the plurality of initial software clusters; filtering, based on a code similarity between software packages included in any initial software cluster, the software packages included in the any initial software cluster, to obtain a candidate software cluster; and using a candidate software cluster including the candidate software package as the target software cluster. After the plurality of software packages are clustered, the initial software clusters are further filtered, to ensure that software packages with a high code similarity are located in a same candidate software cluster. Subsequently, a software package with a high code similarity to the candidate software package is determined as a recommended software package that can be affected by the vulnerability, to improve precision of the same-source extension.

In a possible implementation, after the plurality of recommended software packages are obtained, the method further includes: determining, from the plurality of recommended software packages, a target software package matching the annotation object; and determining a software version affected by the vulnerability in the target software package. The software version affected by the vulnerability in the target software package is further determined. A determined impact range of the vulnerability is more detailed and accurate.

In a possible implementation, the determining, from the plurality of recommended software packages, a target software package matching the annotation object includes: sending information about the plurality of recommended software packages to a terminal, where the terminal is configured to: display the information about the plurality of recommended software packages, and return information about the target software package matching the annotation object; and receiving the information that is about the target software package and that is sent by the terminal. The recommended software package matching the annotation object is determined as the target software package, and interaction experience is high.

In a possible implementation, the determining a software version affected by the vulnerability in the target software package includes: obtaining, based on the information about the target software package, version information of the target software package from an information base including version information of the plurality of software packages; and sending the version information of the target software package to the terminal, and receiving the software version returned by the terminal.

According to a second aspect, a vulnerability analysis apparatus is provided. The apparatus is used in an analysis device, and the apparatus includes: an obtaining module, configured to obtain software environment information of a vulnerability, where the software environment information is used to describe software affected by the vulnerability; a searching module, configured to obtain n candidate software packages through searching based on the software environment information, where n is an integer greater than or equal to 1; and an extension module, configured to perform same-source extension on the n candidate software packages to obtain a plurality of recommended software packages, where a quantity of the plurality of recommended software packages is greater than n, and the recommended software package is used to assist an annotation object in determining an impact range of the vulnerability.

In a possible implementation, the obtaining module is configured to: obtain vulnerability description information of the vulnerability; identify a software entity in the vulnerability description information; and extract a context of the software entity from the vulnerability description information, and obtain the software environment information based on the extracted context.

In a possible implementation, the searching module is configured to: search, based on the software environment information, a database including description information of a plurality of software packages, to obtain m initial software packages related to the vulnerability, where m is an integer greater than n; and select n initial software packages from the m initial software packages based on the software environment information as the n candidate software packages.

In a possible implementation, the searching module is configured to: sort the m initial software packages based on software description information of each initial software package and the software environment information, to obtain a sorting result, where a ranking of any initial software package in the sorting result indicates a relevance degree between the any initial software package and the vulnerability; and select the n initial software packages from the m initial software packages based on the sorting result.

In a possible implementation, the obtaining module is further configured to obtain a software package filtering model; and the searching module is configured to invoke the software package filtering model to select the n initial software packages from the m initial software packages based on the software environment information.

In a possible implementation, the extension module is configured to: cluster the plurality of software packages based on description information of software packages in the database, to obtain at least one target software cluster, where the target software cluster is a software cluster including the candidate software package, and the target software cluster further includes a software package that has a same source as the candidate software package; and use a candidate software package in the at least one target software cluster and a same-source software package that meets a condition as the recommended software packages.

In a possible implementation, the extension module is configured to: obtain a description vector of each software package in the plurality of software packages based on the description information of the software packages in the database; cluster the plurality of software packages based on the description vector of each software package to obtain a plurality of initial software clusters; calculate a code similarity between software packages included in each initial software cluster in the plurality of initial software clusters; filter, based on a code similarity between software packages included in any initial software cluster, the software packages included in the any initial software cluster, to obtain a candidate software cluster; and use a candidate software cluster including the candidate software package as the target software cluster.

In a possible implementation, the apparatus further includes: a determining module, configured to: determine, from the plurality of recommended software packages, a target software package matching the annotation object; and determine a software version affected by the vulnerability in the target software package.

In a possible implementation, the determining module is configured to: send information about the plurality of recommended software packages to a terminal, where the terminal is configured to: display the information about the plurality of recommended software packages, and return information about the target software package matching the annotation object; and receive information that is about the target software package and that is sent by the terminal.

In a possible implementation, the determining module is configured to: obtain, based on the information about the target software package, version information of the target software package from an information base including version information of the plurality of software packages; and send the version information of the target software package to the terminal, and receive the software version returned by the terminal.

According to a third aspect, a computing device cluster is provided. The computing device cluster includes at least one computing device, and each computing device includes a processor and a memory. The processor of the at least one computing device is configured to execute instructions stored in the memory of the at least one computing device, to enable the computing device cluster to perform any vulnerability analysis method according to the first aspect.

According to a fourth aspect, a computer-readable storage medium is provided. The computer-readable storage medium includes computer program instructions, and when the computer program instructions are executed by a computing device cluster, the computing device cluster performs any vulnerability analysis method according to the first aspect.

According to a fifth aspect, a computer program (product) including instructions is provided, and when the instructions are run by a computing device cluster, the computing device cluster is enabled to perform any vulnerability analysis method according to the first aspect.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method according to any one of the first aspect or the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a seventh aspect, a chip is provided, including a processor. The processor is configured to: invoke, from a memory, instructions stored in the memory and run the instructions, to enable a communication device on which the chip is installed to perform the method according to the foregoing aspects.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the method according to the foregoing aspects.

It should be understood that, for beneficial effects achieved by the technical solutions in the second aspect to the eighth aspect and the corresponding possible implementations in embodiments of this application, refer to the foregoing technical effects in the first aspect and the corresponding possible implementations. Details are not described herein again.

### BRIEF DESCRIPTION OF DRAWINGS

FIG. 1 is a diagram of an implementation environment according to an embodiment of this application;
FIG. 2 is a flowchart of a vulnerability analysis method according to an embodiment of this application;
FIG. 3 is a diagram of a page according to an embodiment of this application;
FIG. 4 is a diagram of searching for a candidate software package according to an embodiment of this application;
FIG. 5 is a diagram of another page according to an embodiment of this application;
FIG. 6 is a diagram of still another page according to an embodiment of this application;
FIG. 7 is a diagram of yet another page according to an embodiment of this application;
FIG. 8 is a flowchart of another vulnerability analysis method according to an embodiment of this application;
FIG. 9 is a diagram of a same-source extension process according to an embodiment of this application;
FIG. 10 is a diagram of a structure of a vulnerability analysis apparatus according to an embodiment of this application;
FIG. 11 is a diagram of a structure of a computing device according to an embodiment of this application; and
FIG. 12 is a diagram of connection of computing devices according to an embodiment of this application.

### DESCRIPTION OF EMBODIMENTS

Terms used in embodiments of this application are only used to explain specific embodiments of this application, but are not intended to limit this application. To make objectives, technical solutions, and advantages of this application clearer, the following further describes the implementations of this application in detail with reference to the accompanying drawings.

A vulnerability is a security defect of a computer system. Based on different lifecycles, the vulnerability can be classified into a 0-day (0-day) vulnerability (vulnerability), a 1-day (1-day) vulnerability, and an n-day (n-day) vulnerability. The 0-day vulnerability is a vulnerability that does not have a corresponding fixing patch or mitigation, that is, a vulnerability discovered for the first time. The 1-day vulnerability is a vulnerability that already has a corresponding fixing patch or mitigation, but most users have not used the fixing patch or mitigation measure. The n-day vulnerability is a vulnerability that already has a corresponding fixing patch or mitigation, and most users already use the fixing patch to fix the vulnerability. The vulnerability affects security of the computer system. Therefore, a discovered vulnerability needs to be fixed to reduce a risk brought by the vulnerability. Embodiments of this application provide a vulnerability analysis method, to determine a software package affected by a vulnerability, to assist a fixing object in fixing the software package affected by the vulnerability.

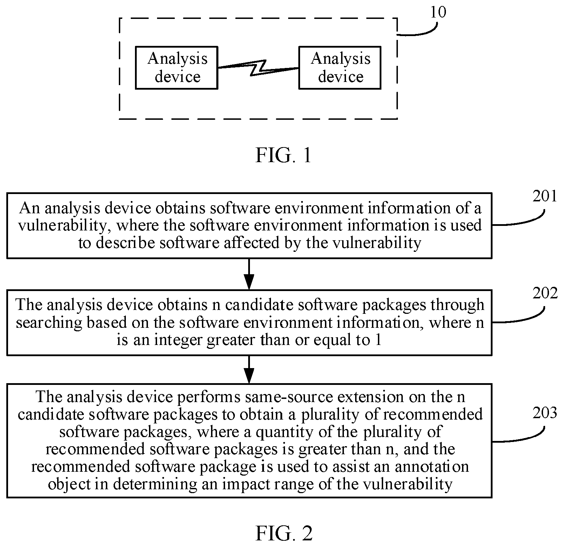

FIG. 1 is a diagram of an implementation environment of a vulnerability analysis method according to an embodiment of this application. The implementation environment is a computing device cluster 10. The computing device cluster 10 includes at least one analysis device, and analysis devices may be in communication connection with each other in a wired or wireless network manner. Optionally, the vulnerability analysis method may be independently performed by one analysis device, or may be performed by a plurality of analysis devices included in the computing device cluster 10 through interaction. A quantity of analysis devices included in the computing device cluster 10 is not limited in this embodiment of this application. In FIG. 1, only two analysis devices are used as an example for description.

For example, the analysis device included in the computing device cluster 10 may be a server, for example, a central server, an edge server, or a local server in a local data center. The server may be a physical server, or may be a cloud server that provides a cloud computing server. In some embodiments, the analysis device included in the analysis device cluster 10 may alternatively be a terminal device like a desktop computer, a notebook computer, or a smartphone.

An embodiment of this application provides a vulnerability analysis method. The vulnerability analysis method may be applied to the implementation environment shown in FIG. 1. The method may be performed by an analysis device. A flowchart of the method is shown in FIG. 2, and includes S201 to S203.

S201: The analysis device obtains software environment information of a vulnerability, where the software environment information is used to describe software affected by the vulnerability.

A manner of determining a to-be-analyzed vulnerability is not limited in this embodiment of this application. A computer system may be periodically detected, and a vulnerability that is located in the computer system and that is discovered through periodic detection is used as the to-be-analyzed vulnerability. Alternatively, a vulnerability that is included in security information periodically released by a computer system provider or a software provider in the computer system may be used as the to-be-analyzed vulnerability. In a possible implementation, there are a plurality of vulnerabilities discovered based on the foregoing operations. For example, the security information released by the computer system provider includes a plurality of vulnerabilities. Therefore, the analysis device needs to select one vulnerability from the plurality of vulnerabilities as the to-be-analyzed vulnerability. The analysis device may select randomly, may select based on discovery time of the vulnerability, or may determine a vulnerability matching an annotation object as the to-be-analyzed vulnerability. The annotation object is an object annotating an impact range of the vulnerability. The vulnerability matching the annotation object may be a vulnerability selected by the annotation object, may be a vulnerability assigned to the annotation object to perform annotation, or the like.

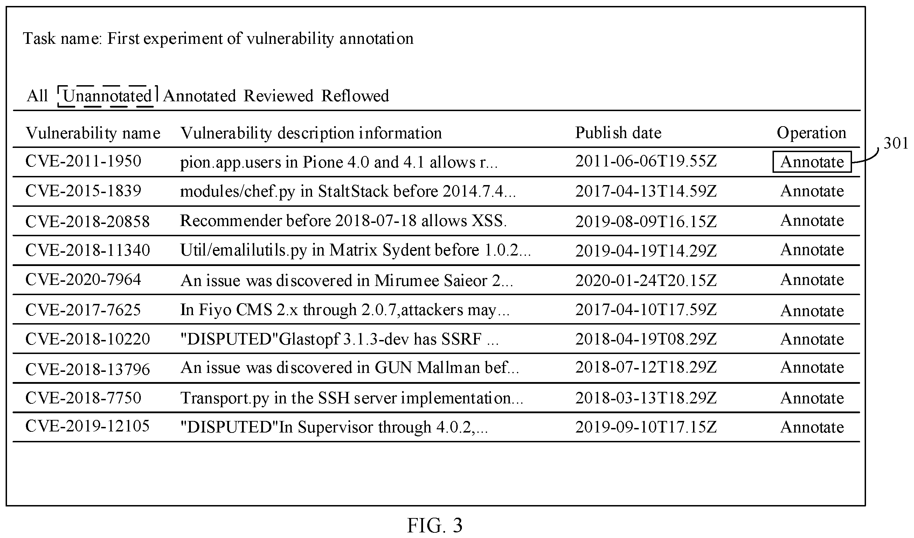

For example, FIG. 3 is a diagram of a page according to an embodiment of this application. FIG. 3 shows a first page that displays a plurality of vulnerabilities. A page type of the first page is a tab (tab) page. An analysis device sends information about a vulnerability to a terminal, and the terminal displays the information about the vulnerability, so that an annotation object selects one vulnerability from the vulnerabilities based on the information about the vulnerability as a to-be-analyzed vulnerability. As shown in FIG. 3, the information about the vulnerability may include a vulnerability name, vulnerability description information, and a release date of the vulnerability, and the information about the vulnerability may further include other content. After an annotation object selects the vulnerability, an annotation control of the vulnerability may be triggered. The terminal sends an identifier of the to-be-analyzed vulnerability to the analysis device, and based on the identifier, the analysis device determines a vulnerability matching the annotation object as the to-be-analyzed vulnerability. The first page shown in FIG. 3 includes an annotation control 301 corresponding to each vulnerability. In this embodiment of this application, a manner of triggering the annotation control and another subsequently related control is not limited, and the triggering may be implemented through tapping, or may be implemented through a voice. The tap triggering may be implemented based on a mouse and a keyboard that are connected to the terminal, or when a display screen of the terminal supports a touchscreen function, the tap triggering may be implemented by tapping a screen.

Regardless of which manner is used to determine the to-be-analyzed vulnerability, the analysis device may obtain software environment information of the to-be-analyzed vulnerability. An obtaining process includes but is not limited to: obtaining vulnerability description information of the vulnerability; identifying a software entity in the vulnerability description information; and extracting a context of the software entity from the vulnerability description information, and obtaining the software environment information based on the extracted context.

In a possible implementation, the analysis device obtains vulnerability description information in the internet by using a web crawler. For example, the vulnerabilities analyzed in this application are 1-day vulnerabilities and n-day vulnerabilities. These two types of vulnerabilities are not vulnerabilities discovered for the first time, but vulnerabilities with a fixing patch or mitigation. Therefore, the internet includes vulnerability description information of the two types of vulnerabilities, and the analysis device may directly obtain the vulnerability description information by using the web crawler. Certainly, the analysis device may alternatively receive vulnerability description information sent by another network device. An example in which the another network device is the terminal is used, and the terminal obtains vulnerability description information of each vulnerability by using the web crawler. After selecting the to-be-analyzed vulnerability, the annotation object may send an identifier of the vulnerability and the vulnerability description information to the analysis device, and the analysis device obtains the vulnerability description information based on the identifier and the vulnerability description information.

Optionally, the vulnerability description information is a character segment that is used to describe the vulnerability and that includes a plurality of characters, for example, the vulnerability description information shown in FIG. 3. The plurality of characters in the vulnerability description information include the software entity. The software entity is a text fragment that identifies a software package and that includes coordinates of the software package. The coordinates of the software package are preset fields used for importing the software package. A maven (maven) central warehouse development project is used as an example. A plurality of software packages need to be imported for development of one project. Coordinates of the software package to be imported can be written into an open file of the project. Then, the maven can automatically search for, from the internet based on the coordinates of the software package, the software package to be imported, and download the software package to a local computer, to import the software package.

The analysis device identifies a location of the software entity in the vulnerability description information and extracts the software entity of the vulnerability description information. Because the software entity can identify the software package, the software entity in the vulnerability description information can identify a software package affected by the vulnerability. In addition, the foregoing process of identifying the software entity may be implemented based on a pre-trained software entity extraction model. For example, the vulnerability description information is input into the software entity extraction model, and the software entity extraction model is invoked to output the software entity. The software entity extraction model may be obtained through training by using a deep learning method. For example, a plurality of pieces of vulnerability description information of a location of a known reference software entity in a training set are obtained, the plurality of pieces of vulnerability description information are input into an initial software entity extraction model, an initial software entity of each piece of vulnerability description information is output, an error loss is calculated by using an error function between the initial software entity of each piece of vulnerability description information and a reference software entity of each piece of vulnerability description information, and a parameter of the initial software entity extraction model is continuously adjusted by using the error loss, to obtain the software entity extraction model used in this application. An error function used for training the software entity extraction model includes but is not limited to a cross entropy loss function. The training set in the foregoing training process may be obtained based on an open-source database, and the reference software entity may be extracted from the vulnerability description information in a manual annotation manner.

Optionally, after determining the location of the software entity, the analysis device further extracts the context of the software entity from the vulnerability description information, and uses the context of the software entity and the software entity as the software environment information. For example, the context of the software entity is a first quantity of words before and after the software entity that is used as a starting point. The first quantity may be any positive integer that is set based on experience. For example, if the first quantity is 150, extracting the context of the software entity is extracting 150 words before and after the software entity, and the extracted 300 words are used as the context of the software entity. Because the software entity does not exist independently in the vulnerability description information, there are some constraints or impact between the software entity and the context. In comparison with searching using the software entity, searching using the software environment information including the context of the software entity has a larger quantity of words used for searching, and a result obtained through searching is more comprehensive.

S202: The analysis device obtains n candidate software packages through searching based on the software environment information, where n is an integer greater than or equal to 1.

For example, a process in which the analysis device searches for the candidate software package includes: searching, based on the software environment information, a database including description information of a plurality of software packages, to obtain m initial software packages related to the vulnerability, where m is an integer greater than n; and selecting n initial software packages from the m initial software packages based on the software environment information as the n candidate software packages. A search method used for searching the database is not limited in this embodiment of this application. The database may be searched by using a term frequency-inverse document frequency (term frequency-inverse document frequency, TF-IDF) algorithm, or may be searched by using another text search method. A quantity m of the initial software packages obtained through searching may be set based on the experience. For example, m is set to 512 based on the experience.

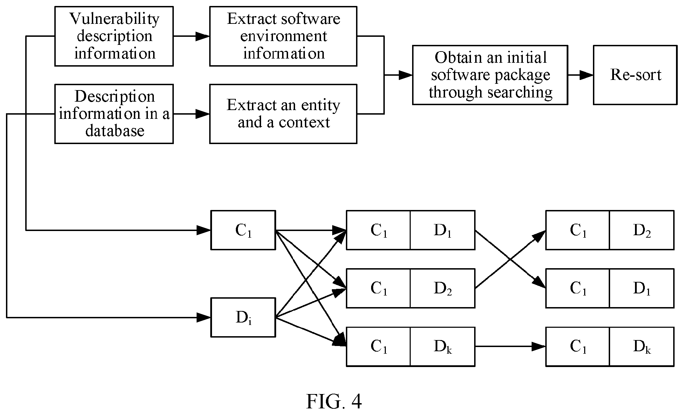

FIG. 4 is a diagram of searching for a candidate software package according to an embodiment of this application. Refer to FIG. 4, software environment information, that is, C₁ in FIG. 4, is extracted from vulnerability description information, and an entity and a context, that is, Dᵢ in FIG. 4, in description information of each software package included in a database are extracted. i is a positive integer, and is used to identify different entities and contexts, and a maximum value of i is a total quantity of software packages included in the database. A process of extracting the entity and the context from the description information in the database is similar to the process of extracting the software environment information in S201. Details are not described herein again. An entity and a context that match the software environment information are searched for in a plurality of entities and contexts, and a software package corresponding to the entity and the context that match the software environment information is determined as an initial software package. For example, the software environment information is C₁ in FIG. 4, and an entity and a context that match C₁ are D₁, D₂, and Dₖ respectively, where k is a positive integer. In FIG. 4, a combination of C₁ and D₁ indicates that D₁ and C₁ are successfully matched. A meaning of another combination relationship is similar to a meaning of a combination relationship of C₁ and D₁. Details are not described one by one.

In a possible implementation, after obtaining m initial software packages, an analysis device filters the m initial software packages. A filtering process includes: sorting the m initial software packages based on software description information of each initial software package and the software environment information, to obtain a sorting result, where a ranking of any initial software package in the sorting result indicates a relevance degree between the any initial software package and a vulnerability; and selecting n initial software packages from the m initial software packages based on the sorting result. The initial software package is determined from the database based on occurrence frequencies of a same character in the entity and the context and the software environment information. A process of sorting the initial software packages is determining relevance degrees between the initial software packages and the vulnerability based on content indicated by characters in the software description information and the software environment information, and then sorting the initial software packages based on the relevance degrees. For example, a sorting result of C₁D₂, C₁D₁, and C₁Dₖ shown in FIG. 4 is used, and first n initial software packages in the sorting result are used as a candidate software package. In comparison with the operation of determining the initial software package, for the foregoing sorting operation, deeper sorting is performed, an obtained relevance degree between each initial software package and the vulnerability is more accurate, and accuracy of a candidate software package that relates to the vulnerability and that is determined based on a more accurate relevance degree is higher.

Optionally, the initial software packages may be filtered by using a deep learning technology. For example, the analysis device obtains a software package filtering model obtained through training by using the deep learning technology, and invokes the software package filtering model to select the n initial software packages from the m initial software packages based on the software environment information. n is a positive integer set based on the experience. For example, n is set to 5 based on the experience. The software package filtering model may be obtained through training based on the training set. A training manner is similar to the training manner of the software entity extraction model in S201. Details are not described herein again.

The candidate software package is automatically determined by using the vulnerability description information and a database including description information of the software package in combination with a search technology and the deep learning technology. Before the software package filtering model is used, a plurality of initial software packages are already obtained through searching based on the search technology. For a vulnerability that lacks a correspondence in the training set, an initial software package affected by the vulnerability can also be determined in the database based on the search technology, to ensure accuracy of a determined candidate software package. This has high universality.

S203: The analysis device performs same-source extension on the n candidate software packages to obtain a plurality of recommended software packages, where a quantity of the plurality of recommended software packages is greater than n, and the recommended software package is used to assist an annotation object in determining an impact range of the vulnerability.

In a possible implementation, after determining candidate software packages affected by the vulnerability, the analysis device further performs same-source extension on the candidate software packages, to improve a recall rate of vulnerability analysis. Optionally, a same-source extension process includes: clustering the plurality of software packages based on the description information of the software packages in the database, to obtain at least one target software cluster, where the target software cluster is a software cluster including the candidate software package, and the target software cluster further includes a software package that has a same source as the candidate software package; and using a candidate software package in the at least one target software cluster and a same-source software package that meets a condition as the recommended software packages.

For example, a process of obtaining the target software cluster includes: obtaining a description vector of each software package in the plurality of software packages based on the description information of the software packages in the database; clustering the plurality of software packages based on the description vector of each software package to obtain a plurality of initial software clusters; calculating a code similarity between software packages included in each initial software cluster in the plurality of initial software clusters; filtering, based on a code similarity between software packages included in any initial software cluster, the software packages included in the any initial software cluster, to obtain a candidate software cluster; and using a candidate software cluster including the candidate software package as the target software cluster.

Optionally, vectorization is performed on the description information of the software package in a sentence embedding manner, to obtain the description vector. In addition, a step of vectorizing the description information may be implemented based on a pre-trained sentence embedding model. After the description vector is obtained, clustering is performed by using a clustering algorithm, the plurality of software packages are grouped based on a similarity, and software packages with a high similarity are grouped into one initial software cluster. The used clustering algorithm is not limited in this application, for example, mean drift clustering, K-means (K-Means) clustering, and graph community detection (graph community detection).

The foregoing operation of clustering the software packages in the database may be performed before the analysis device starts vulnerability analysis, and the foregoing clustering operation may be performed by the analysis device, or may be performed by another network device. The clustering of the initial software clusters is completed in advance, so that when the same-source extension is subsequently performed on the candidate software packages based on the initial software clusters, clustering time of the initial software clusters can be reduced, to improve same-source extension efficiency.

After obtaining the plurality of initial software clusters, the analysis device calculates the code similarity between software packages included in any initial software cluster. Source code of each software package is stored in the database, the code similarity between the software packages is calculated based on a proportion of overlapping characters in the source code in the source code, and a software package whose code similarity is lower than a similarity threshold is filtered out to obtain the candidate software cluster. Alternatively, the plurality of software packages are sorted based on the code similarity, and software packages whose sorting rankings are within a second quantity are used as software packages included in the candidate software cluster. Both the similarity threshold and the second quantity may be set based on the experience.

Because all software packages included in the candidate software cluster are software packages with a high degree of correlation, the software packages may be referred to as same-source software packages of the candidate software packages. Therefore, when the candidate software cluster includes a candidate software package, another software package included in the candidate software cluster is highly correlated with the candidate software package. When the candidate software package is affected by the vulnerability, there is a probability that the another software package that is highly correlated with the candidate software package is also affected by the vulnerability. For example, the software entity is used as coordinates. Coordinates of a software package may change, but source code of the software package does not change. Software packages with different coordinates but a high source code similarity or same source code are clustered together by using the candidate software cluster. When the vulnerability affects the candidate software package in the candidate software cluster, a software package that is located in the same candidate software cluster as the candidate software package and that has the high source code similarity or the same source code is also affected by the vulnerability. Therefore, the candidate software cluster including the candidate software package may be used as the target software cluster, and then same-source extension is performed on the candidate software package based on a software package included in the target software cluster.

Optionally, the analysis device uses a software package that is in the target candidate cluster and that meets a condition and the candidate software package as the recommended software packages. A condition for determining the recommended software package is not limited in this embodiment of this application. A similarity between the software package and the candidate software package may be higher than a first threshold that is set based on the experience, or coordinates of the software package and coordinates of the candidate software package may be continuous coordinates, or when the software package is located in the target candidate cluster, the software package belongs to software that meets the condition. Certainly, the analysis device may further obtain historical data of the vulnerability, and determine, based on the historical data of the vulnerability, the software package that meets the condition. For example, if the historical data is software whose vulnerability is discovered for the first time, a software package that has a same source as the software is determined as the software package that meets the condition. Based on the foregoing example, it may be understood that the software package that meets the condition may be all software packages in the target candidate cluster, or the software package that meets the condition may be some software packages. This is not limited in this embodiment of this application. By performing same-source extension on the candidate software packages, a larger quantity of recommended software packages affected by vulnerability are determined, an analysis result is more comprehensive, and a recall rate is higher.

One recommended software package may have a plurality of software versions. Some software versions may be affected by the vulnerability, while some software versions may not be affected by the vulnerability. For example, a recommended software package A includes a software version 1 and a software version 2. The software version 1 is an initial version of the recommended software package A, and the software version 2 is a version in which a vulnerability fixing patch is added based on the software version 1. Therefore, the software version 1 is affected by the vulnerability, and the software version 2 is not affected by the vulnerability. Based on this, the impact range of the vulnerability is determined. In addition to determining the recommended software package affected by the vulnerability, a specific software version that is of the recommended software package and that may be affected by the vulnerability further needs to be determined, to further improve an analysis granularity and accuracy. Optionally, the analysis device determines, from the plurality of recommended software packages, a target software package matching the annotation object; and determines a software version affected by the vulnerability in the target software package.

The target software package matching the annotation object includes, but is not limited to, a recommended software package selected by the annotation object. The analysis device may send information about the plurality of recommended software packages to a terminal, where the terminal is configured to: display the information about the plurality of recommended software packages, and return information about the target software package matching the annotation object; and receive information that is about the target software package and that is sent by the terminal. The information about the recommended software package is, for example, a name of the recommended software package, or a result caused by impact of the vulnerability on the recommended software package.

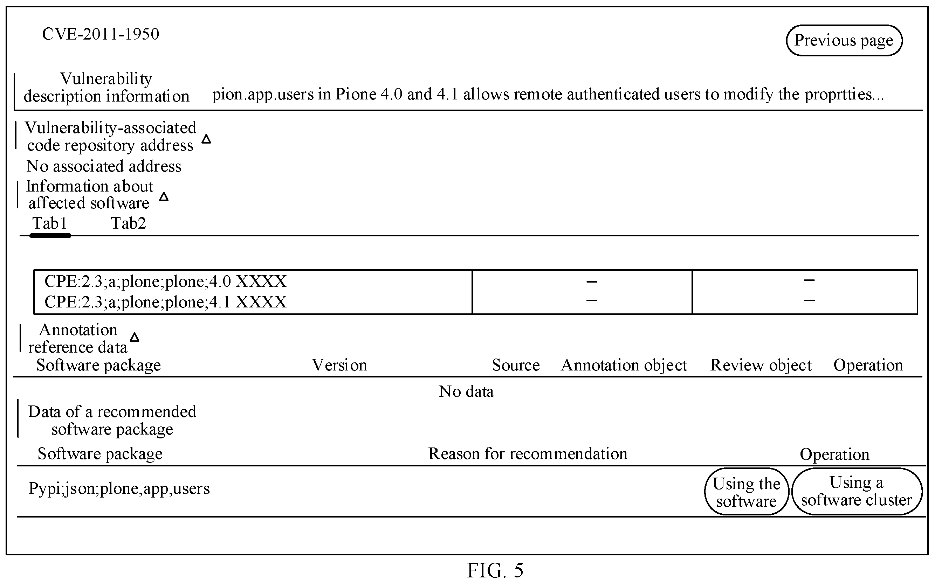

FIG. 5 is a diagram of another page according to an embodiment of this application. FIG. 5 shows a second page that displays a plurality of recommended software packages. As shown in FIG. 5, in addition to the recommended software packages, the second page also displays basic information about a vulnerability to assist an annotation object in understanding a vulnerability that is being analyzed. The basic information about the vulnerability is, for example, vulnerability description information, a vulnerability-associated code repository, and customer premises equipment (customer premises equipment, CPE) information of the vulnerability. The second page further provides a selection control corresponding to each recommended software package, and the annotation object may trigger the selection control to determine a target software package. In addition, the annotation object may choose to annotate only the recommended software package, for example, trigger a control "using the software" shown in FIG. 5. The annotation object may further choose to annotate a software cluster in which the recommended software package is located, for example, trigger a control "using the software cluster" shown in FIG. 5.

The annotation object selects, by using an operation terminal, a recommended software package that needs to be annotated as the target software package, and the terminal sends information about the target software package to an analysis device. After receiving the information that is about the target software package and that is returned by the terminal, the analysis device obtains, based on the information about the target software package, version information of the target software package from an information base including version information of the plurality of software packages; and sends the version information of the target software package to the terminal, and receives a software version returned by the terminal. Optionally, the information base that stores the version information of the plurality of software packages may be an open source base, or may be a dedicated base collected and collated by a unit in which the annotation object is located. The version information of the target software package includes at least one software version, and the annotation object selects, from the at least one software version, a software version affected by the vulnerability.

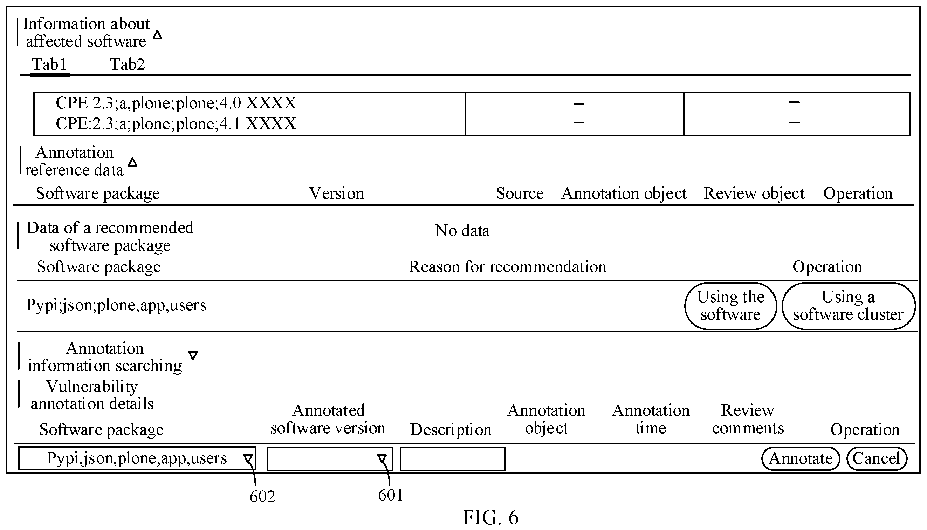

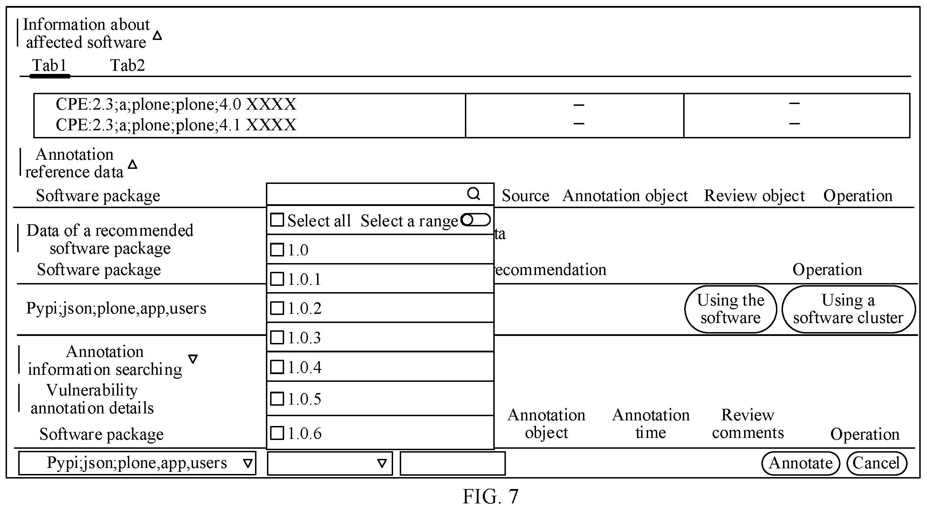

Optionally, after the version information of the target software package is sent to the terminal, the terminal may display the version information of the target software package for the annotation object to select. For example, FIG. 6 is a diagram of still another page according to an embodiment of this application. A third page shown in FIG. 6 is a page displayed by a terminal after an annotation object selects a target software package on a second page. The target object may trigger a display control 601 on the third page, to display version information of the target software package, and annotate, from a plurality of software versions included in the version information, a software version affected by a vulnerability. FIG. 7 is a diagram of yet another page according to an embodiment of this application. A fourth page shown in FIG. 7 is a display status of a terminal after an annotation object triggers a display control 601 on a third page. On the fourth page, a first region is used to display version information of a target software package. The version information includes seven software versions: 1.0, 1.0.1, 1.0.2, 1.0.3, 1.0.4, 1.0.5, and 1.0.6. The annotation object selects a software version affected by a vulnerability from the seven software versions.

In addition, when the annotation object selects an annotation control corresponding to the software version, the terminal provides a plurality of annotation modes, for example, checking, selecting all, and selecting a range. Checking indicates that a plurality of software versions can be selected, selecting all indicates that all the software versions included in the version information are selected, and selecting a range indicates that a software version in the range is selected. For example, after the annotation object triggers a control of selecting a range on the fourth page, the terminal belongs to a mode of selecting a range, and the annotation object sequentially selects the version number 1.0.2 and the version number 1.0.5 as a version range. The four software versions: 1.0.2, 1.0.3, 1.0.4, and 1.0.5 are selected as software versions affected by the vulnerability.

Optionally, determining of the software version may be performed by an analysis device and the terminal through interaction shown in the foregoing embodiments, or determining of the software version may be independently completed by the terminal. After determining the target software package, the terminal obtains and displays the version information of the target software package, and the annotation object selects, based on the version information displayed by the terminal, the software version affected by the vulnerability from the version information. In this case, a process in which the analysis device determines a software version of the target software package is receiving a software version of the target software package returned by the terminal. However, regardless of a manner in which the analysis device determines the software version of the target software package, after the software version is determined, a review object reviews the software version, and adds, to a vulnerability database, a correspondence between a software version that is correctly annotated and that is indicated by a review result and a vulnerability, to enrich correspondences that are stored in the vulnerability database and that are between vulnerabilities and software packages.

In addition, after determining a software version that is affected by the vulnerability and that is of one recommended software package, the analysis device further continues to determine a software version that is affected by the vulnerability and that is of a next recommended software package. For a case in which a control "using a software cluster" is triggered when the annotation object selects the target software package, the third page further includes a display control of another target software package, for example, the display control 602 shown in FIG. 6. After the annotation object annotates a software version of a 1^{st} target software package, the display control 602 is triggered. The terminal displays other recommended software packages that are located in a same target software cluster as the 1^{st} target software package. The annotation object selects, from the other recommended software packages as the target software package, a 2^{nd} recommended software package for annotation.

In conclusion, according to the vulnerability analysis method provided in this embodiment of this application, initial software packages are obtained through searching, and then a candidate software package is determined from the plurality of initial software packages. For a case in which a training set in a related technology does not include a vulnerability in a correspondence, a candidate software package that is affected by the vulnerability can also be found by using the method provided in this embodiment of this application, and universality is high. In addition, after the candidate software packages are determined, same-source extension is further performed on the candidate software packages, to obtain a larger quantity of recommended software packages, to improve a recall rate of vulnerability analysis. The recommended software package is automatically determined by using the analysis device, an automatic processing procedure of vulnerability impact analysis for vulnerabilities and exposures (common vulnerabilities & exposures, CVE) is accelerated, time for manual vulnerability analysis is shortened, a vulnerability warning response speed is improved, and a time window for vulnerability exposure is effectively reduced.

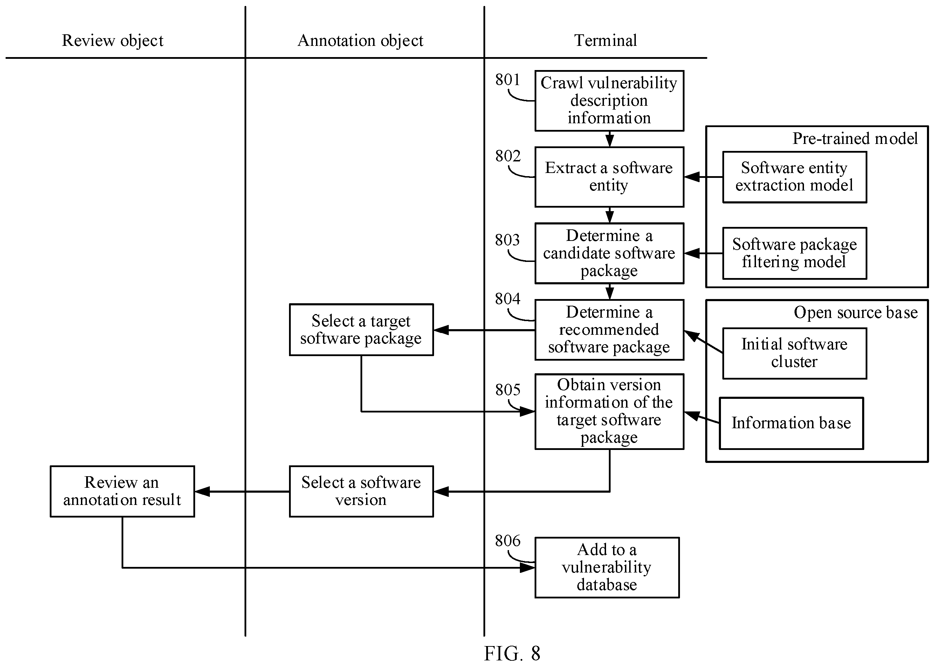

FIG. 8 is a flowchart of another vulnerability analysis method according to an embodiment of this application. When an analysis device is a terminal, FIG. 8 shows an interaction process between the terminal, an annotation object, and a review object.

In step 801, the terminal crawls vulnerability description information.

Optionally, a process in which the terminal crawls the vulnerability description information is similar to the process in which the analysis device crawls the vulnerability description information in S201 in the embodiment shown in FIG. 2. Details are not described herein temporarily.

In step 802, the terminal invokes a software entity extraction model to extract a software entity from the vulnerability description information.

Optionally, a process in which the terminal extracts the software entity from the vulnerability description information is similar to the process in which the analysis device extracts the software entity from the vulnerability description information in S201 in the embodiment shown in FIG. 2. Details are not described herein temporarily.

In step 803, the terminal determines a candidate software package based on the software entity by using a software package filtering model.

A process in which the terminal determines the candidate software package based on the software entity by using the software package filtering model is similar to the process in which the analysis device determines the candidate software package based on the software entity by using the software package filtering model in S202 in the embodiment shown in FIG. 2. Details are not described herein temporarily. Optionally, the software entity extraction model in step 802 and the software package filtering model in step 803 are pre-trained models.

In step 804, the terminal performs same-source extension on the candidate software package by using initial software clusters, to determine recommended software packages.

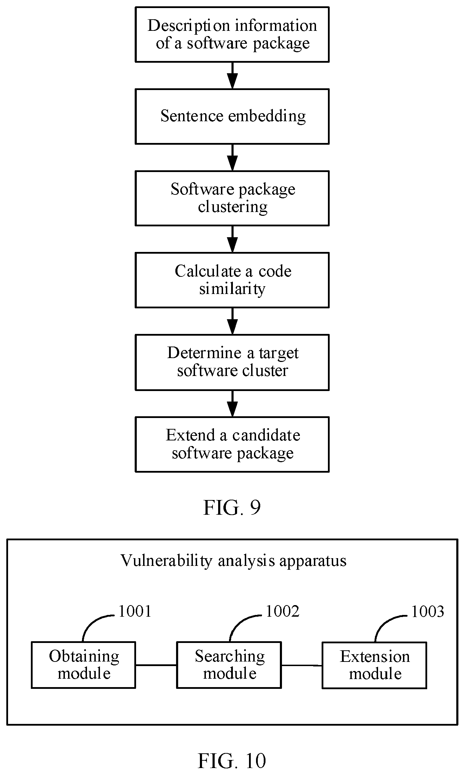

Optionally, for a process of performing same-source extension on the candidate software package to obtain the plurality of recommended software packages, refer to FIG. 9. Sentence embedding processing is performed on description information of software packages in a database, to obtain description vectors of the software packages. Software package clustering is performed based on the description vectors of the software packages to obtain the initial software clusters, and a code similarity between software packages included in each initial software cluster is calculated. The software packages included in the initial software cluster are filtered based on the code similarity, to obtain a candidate software cluster, a candidate software cluster including the candidate software package is used as a target software cluster, and the candidate software package is extended based on the target software cluster, to obtain the plurality of recommended software packages.

For example, the terminal displays the plurality of recommended software packages, the annotation object selects a target software package from the plurality of recommended software packages, and the terminal performs an operation in step 805 based on selection of the annotation object.

In step 805, the terminal obtains version information of the target software package from an information base.

In addition, the terminal further displays the version information of the target software package, and the annotation object selects a software version of the target software package. Optionally, both the database that provides the initial software cluster in step 804 and information base data that provides the version information in step 805 are open source bases.

For example, the review object reviews an annotation result, and determines whether the software version annotated by the annotation object is accurate. After determining that the annotated software version is correct, the terminal performs an operation in step 806, to add a correspondence between the software version and the vulnerability to a vulnerability database.

The foregoing describes the vulnerability analysis method in embodiments of this application. In correspondence to the foregoing method, embodiments of this application further provide a vulnerability analysis apparatus. FIG. 10 is a diagram of a structure of a vulnerability analysis apparatus according to an embodiment of this application. Based on the following plurality of modules shown in FIG. 10, the vulnerability analysis apparatus shown in FIG. 10 can perform all or some of the operations shown in FIG. 2. It should be understood that the apparatus may include more additional modules than the shown modules, or a part of the shown modules are omitted. This is not limited in embodiments of this application. As shown in FIG. 10, the apparatus includes:
an obtaining module 1001, configured to obtain software environment information of a vulnerability, where the software environment information is used to describe software affected by the vulnerability;
a searching module 1002, configured to obtain n candidate software packages through searching based on the software environment information, where n is an integer greater than or equal to 1; and
an extension module 1003, configured to perform same-source extension on the n candidate software packages to obtain a plurality of recommended software packages, where a quantity of the plurality of recommended software packages is greater than n, and the recommended software package is used to assist an annotation object in determining an impact range of the vulnerability.

In a possible implementation, the obtaining module 1001 is configured to: obtain vulnerability description information of the vulnerability; identify a software entity in the vulnerability description information; and extract a context of the software entity from the vulnerability description information, and obtain the software environment information based on the extracted context.

In a possible implementation, the searching module 1002 is configured to: search, based on the software environment information, a database including description information of a plurality of software packages, to obtain m initial software packages related to the vulnerability, where m is an integer greater than n; and select n initial software packages from the m initial software packages based on the software environment information as the n candidate software packages.

In a possible implementation, the searching module 1002 is configured to: sort the m initial software packages based on software description information of each initial software package and the software environment information, to obtain a sorting result, where a ranking of any initial software package in the sorting result indicates a relevance degree between the any initial software package and the vulnerability; and select the n initial software packages from the m initial software packages based on the sorting result.

In a possible implementation, the obtaining module 1001 is further configured to obtain a software package filtering model; and the searching module 1002 is configured to invoke the software package filtering model to select the n initial software packages from the m initial software packages based on the software environment information.

In a possible implementation, the extension module 1003 is configured to: cluster the plurality of software packages based on description information of software packages in the database, to obtain at least one target software cluster, where the target software cluster is a software cluster including the candidate software package, and the target software cluster further includes a software package that has a same source as the candidate software package; and use a candidate software package in the at least one target software cluster and a same-source software package that meets a condition as the recommended software packages.

In a possible implementation, the extension module 1003 is configured to: obtain a description vector of each software package in the plurality of software packages based on the description information of the software packages in the database; cluster the plurality of software packages based on the description vector of each software package to obtain a plurality of initial software clusters; calculate a code similarity between software packages included in each initial software cluster in the plurality of initial software clusters; filter, based on a code similarity between software packages included in any initial software cluster, the software packages included in the any initial software cluster, to obtain a candidate software cluster; and use a candidate software cluster including the candidate software package as the target software cluster.

In a possible implementation, the apparatus further includes: a determining module, configured to: determine, from the plurality of recommended software packages, a target software package matching the annotation object; and determine a software version affected by a vulnerability in the target software package.

In a possible implementation, the determining module is configured to: send information about the plurality of recommended software packages to a terminal, where the terminal is configured to: display the information about the plurality of recommended software packages, and return information about the target software package matching the annotation object; and receive information that is about the target software package and that is sent by the terminal.

In a possible implementation, the determining module is configured to: obtain, based on the information about the target software package, version information of the target software package from an information base including version information of the plurality of software packages; and send the version information of the target software package to the terminal, and receive a software version returned by the terminal.

In the foregoing apparatus, the candidate software packages are obtained through searching based on the software environment information. For a case in which a training set does not include a vulnerability in a correspondence in a related technology, a corresponding candidate software package that is affected can also be found, and universality is high. In addition, after the candidate software packages are determined, the same-source extension is further performed on the candidate software packages, to obtain the larger quantity of recommended software packages, to improve a recall rate of vulnerability analysis.

The obtaining module 1001, the searching module 1002, and the extension module 1003 may all be implemented by using software, or may all be implemented by using hardware. For example, the following uses the obtaining module 1001 as an example to describe an implementation of the obtaining module 1001. Similarly, for implementations of the searching module 1002 and the extension module 1003, refer to the implementation of the obtaining module 1001.

A module is as an example of a software functional unit, and the obtaining module 1001 may include code that is run on a computing instance. The compute instance may include at least one of a physical host (a computing device), a virtual machine, and a container. Further, there may be one or more compute instances. For example, the obtaining module 1001 may include code that is run on a plurality of hosts/virtual machines/containers. It should be noted that a plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is set in one region. A communication gateway needs to be set in each VPC for communication between two VPCs in the same region and cross-region communication between VPCs in different regions, to implement interconnection between the VPCs through the communication gateway.

The module is used as an example of a hardware functional unit, and the obtaining module 1001 may include at least one computing device like a server. Alternatively, the obtaining module 1001 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the obtaining module 1001 may be distributed in a same region, or may be distributed in different regions. The plurality of computing devices included in the obtaining module 1001 may be distributed in a same AZ, or may be distributed in different AZs. Similarly, the plurality of computing devices included in the obtaining module 1001 may be distributed in a same VPC, or may be distributed in different VPCs. The plurality of computing devices may be any combination of computing devices such as the server, the ASIC, the PLD, the CPLD, the FPGA, and the GAL.

It should be noted that, in another embodiment, the obtaining module 1001 may be configured to perform any step in the vulnerability analysis method, the searching module 1002 may be configured to perform any step in the vulnerability analysis method, and the extension module 1003 may be configured to perform any step in the vulnerability analysis method. Steps that the obtaining module 1001, the searching module 1002, and the extension module 1003 are responsible for implementing may be specified as required, and different steps in the vulnerability analysis method are implemented by using the obtaining module 1001, the searching module 1002, and the extension module 1003 respectively, to implement all functions of the vulnerability analysis apparatus.

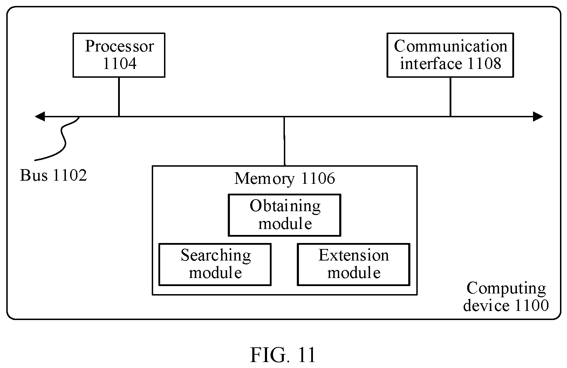

This application further provides a computing device 1100. As shown in FIG. 11, the computing device 1100 includes a bus 1102, a processor 1104, a memory 1106, and a communication interface 1108. The processor 1104, the memory 1106, and the communication interface 1108 communicate with each other through the bus 1102. The computing device 1100 may be a server or a terminal device. It should be understood that quantities of processors and memories in the computing device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1102 may include a path for transferring information between components (for example, the memory 1106, the processor 1104, and the communication interface 1108) of the computing device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1106 stores executable program code, and the processor 1104 executes the executable program code to separately implement functions of the obtaining module, the searching module, and the extension module, to implement the vulnerability analysis method. In other words, the memory 1106 stores instructions used to perform the vulnerability analysis method.

The communication interface 1108 uses a transceiver module, for example, but not limited to, a network interface card or a transceiver, to implement communication between the computing device 1100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

Optionally, for a structure of the at least one computing device included in the computing device cluster, refer to the computing device 1100 shown in FIG. 11. Memories 1106 in one or more computing devices 1100 in the computing device cluster may store same instructions used to perform the vulnerability analysis method.

In some possible implementation, the memories 1106 in the one or more computing devices 1100 in the computing device cluster may separately store a part of the instructions used to perform the vulnerability analysis method. In other words, a combination of the one or more computing devices 1100 may jointly execute the instructions used to perform the vulnerability analysis method.

It should be noted that memories 1106 in different computing devices 1100 in the computing device cluster may store different instructions, and are respectively configured to execute a part of functions of the vulnerability analysis apparatus. In other words, the instructions stored in the memories 1106 in the different computing devices 1100 may implement functions of one or more of the obtaining module, the searching module, and the extension module.

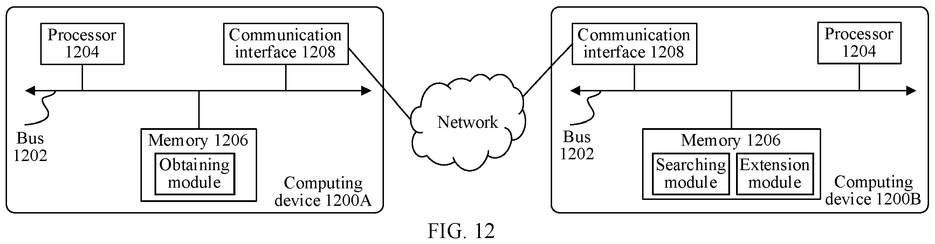

In some possible implementations, the one or more computing devices in the computing device cluster may be connected through a network. The network may be a wide area network, a local area network, or the like. A possible implementation is shown in FIG. 12. As shown in FIG. 12, two computing devices 1200A and 1200B are connected through a network. Specifically, each computing device is connected to the network through a communication interface of the computing device. In this possible implementation, the computing devices 1200A and 1200B include a bus 1202, a processor 1204, a memory 1206, and a communication interface 1208. The memory 1206 in the computing device 1200A stores instructions for performing a function of an obtaining module. In addition, the memory 1206 in the computing device 1200B stores instructions for performing functions of a searching module and an extension module.

A connection manner between computing device clusters shown in FIG. 12 may be that, considering that in the vulnerability analysis method provided in this application, a candidate software package needs to be obtained through searching and same-source extension of the candidate software package need to be performed, therefore, it is considered that functions implemented by the searching module and the extension module are performed by the computing device 1200B.

It should be understood that functions of the computing device 1200A shown in FIG. 12 may alternatively be completed by a plurality of computing devices 1200. Similarly, functions of the computing device 1200B may alternatively be completed by the plurality of computing devices 1200.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the vulnerability analysis method.

It should be understood that the foregoing processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer program (product) including instructions. The computer program (product) may be a software or program product that includes instructions and that can be run on a computing device or be stored in any usable medium. When the computer program (product) is run on at least one computing device, the at least one computing device is enabled to perform the vulnerability analysis method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform the vulnerability analysis method.

An embodiment of this application further provides a chip, including a processor. The processor is configured to: invoke, from a memory, instructions stored in the memory and run the instructions, to enable a communication device on which the chip is installed to perform any vulnerability analysis method above.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform any vulnerability analysis method above.

All or some of the embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk Solid State Disk), or the like.

To clearly describe interchangeability of hardware and software, the steps and composition of embodiments have been generally described in the foregoing descriptions based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable rule search apparatus, so that when the program code is executed by the computer or the another programmable rule search apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, to enable the device, the apparatus, or the processor to perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely logical function division, and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by using some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, function modules in embodiments of this application may be integrated into one processing module, or each of the modules may exist alone physically, or two or more modules may be integrated into one module. The foregoing integrated module may be implemented in a form of hardware, or may be implemented in a form of a software function module.

Terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the terms such as "first" and "second" are used in the following descriptions to describe various elements, these elements should not be limited by the terms. These terms are merely used to distinguish one element from another element. For example, without departing from the scope of the various examples, a first link may be referred to as a second link, and similarly, the second link may be referred to as the first link.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" means two or more. For example, a plurality of second packets mean two or more second packets. The terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should also be understood that, according to the context, the phrase "if it is determined..." or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined only based on A, and B may alternatively be determined based on A and/or other information.

It is to be understood that "one embodiment", "an embodiment", and "a possible implementation" mentioned in the entire specification mean that particular features, structures, or characteristics related to the embodiment or the implementation are included in at least one embodiment of this application. Therefore, "in one embodiment", "in an embodiment", or "in a possible implementation" appearing throughout this specification does not necessarily refer to a same embodiment. In addition, these particular features, structures, or characteristics may be combined in one or more embodiments in any appropriate manner.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments can be made to some technical features thereof, without departing from the protection scope of the technical solutions in embodiments of this application.

## Claims

1. A vulnerability analysis method, wherein the method comprises:
obtaining (201), by an analysis device, software environment information of a vulnerability, wherein the software environment information is used to describe software affected by the vulnerability;
obtaining (202), by the analysis device, n candidate software packages through searching based on the software environment information, wherein n is an integer greater than or equal to 1;
performing (203), by the analysis device, same-source extension on the n candidate software packages to obtain a plurality of recommended software packages, wherein a quantity of the plurality of recommended software packages is greater than n, and the recommended software package is used to assist an annotation object in determining an impact range of the vulnerability; and
wherein the performing same-source extension on the n candidate software packages to obtain a plurality of recommended software packages comprises:
clustering a plurality of software packages in a database based on the description information of the software packages in the database, to obtain at least one target software cluster, wherein the target software cluster is a software cluster comprising the candidate software package, and the target software cluster further comprises a software package that has a same source as the candidate software package; and
using a candidate software package in the at least one target software cluster and a same-source software package that meets a condition as the recommended software packages.

2. The method according to claim 1, wherein the obtaining software environment information of a vulnerability comprises:
obtaining vulnerability description information of the vulnerability;
identifying a software entity in the vulnerability description information; and
extracting a context of the software entity from the vulnerability description information, and obtaining the software environment information based on the extracted context.

3. The method according to claim 1 or 2, wherein the obtaining n candidate software packages through searching based on the software environment information comprises:
searching, based on the software environment information, the database comprising description information of a plurality of software packages, to obtain m initial software packages related to the vulnerability, wherein m is an integer greater than n; and
selecting n initial software packages from the m initial software packages based on the software environment information as the n candidate software packages.

4. The method according to claim 3, wherein the selecting n initial software packages from the m initial software packages based on the software environment information comprises:
sorting the m initial software packages based on software description information of each initial software package and the software environment information, to obtain a sorting result, wherein a ranking of any initial software package in the sorting result indicates a relevance degree between the any initial software package and the vulnerability; and
selecting the n initial software packages from the m initial software packages based on the sorting result.

5. The method according to claim 3 or 4, wherein the method further comprises:
obtaining a software package filtering model; and
the selecting n initial software packages from the m initial software packages based on the software environment information comprises:
invoking the software package filtering model to select the n initial software packages from the m initial software packages based on the software environment information.

6. The method according to claim 1, wherein the condition comprises one or more of the following:
a similarity between the software package and the candidate software package is higher than a first threshold that is set based on the experience; or
coordinates of the software package and coordinates of the candidate software package are continuous coordinates; or
the software package is located in the target software cluster.

7. The method according to claim 1, wherein the clustering the plurality of software packages based on the description information of the software packages in the database, to obtain at least one target software cluster comprises:
obtaining a description vector of each software package in the plurality of software packages based on the description information of the software packages in the database;
clustering the plurality of software packages based on the description vector of each software package to obtain a plurality of initial software clusters;
calculating a code similarity between software packages comprised in each initial software cluster in the plurality of initial software clusters;
filtering, based on a code similarity between software packages comprised in any initial software cluster, the software packages comprised in the any initial software cluster, to obtain a candidate software cluster; and
using a candidate software cluster comprising the candidate software package as the target software cluster.

8. The method according to any one of claims 1 to 7, wherein after the obtaining a plurality of recommended software packages, the method further comprises:
determining, from the plurality of recommended software packages, a target software package matching the annotation object; and
determining a software version affected by the vulnerability in the target software package.

9. The method according to claim 8, wherein the determining, from the plurality of recommended software packages, a target software package matching the annotation object comprises:
sending information about the plurality of recommended software packages to a terminal, wherein the terminal is configured to: display the information about the plurality of recommended software packages, and return information about the target software package matching the annotation object; and
receiving the information that is about the target software package and that is sent by the terminal.

10. The method according to claim 9, wherein the determining a software version affected by the vulnerability in the target software package comprises:
obtaining, based on the information about the target software package, version information of the target software package from an information base comprising version information of the plurality of software packages; and
sending the version information of the target software package to the terminal, and receiving the software version returned by the terminal.

11. A vulnerability analysis apparatus, wherein the apparatus is used in an analysis device, and the apparatus comprises:
an obtaining module(1001), configured to obtain software environment information of a vulnerability, wherein the software environment information is used to describe software affected by the vulnerability;
a searching module(1002), configured to obtain n candidate software packages through searching based on the software environment information, wherein n is an integer greater than or equal to 1;
an extension module(1003), configured to perform same-source extension on the n candidate software packages to obtain a plurality of recommended software packages, wherein a quantity of the plurality of recommended software packages is greater than n, and the recommended software package is used to assist an annotation object in determining an impact range of the vulnerability;
the extension module(1003), configured to cluster a plurality of software packages in a database based on description information of software packages in the database, to obtain at least one target software cluster, wherein the target software cluster is a software cluster comprising the candidate software package, and the target software cluster further comprises a software package that has a same source as the candidate software package; and use a candidate software package in the at least one target software cluster and a same-source software package that meets a condition as the recommended software packages.

12. The apparatus according to claim 11, wherein the obtaining module(1001) is configured to: obtain vulnerability description information of the vulnerability; identify a software entity in the vulnerability description information; and extract a context of the software entity from the vulnerability description information, and obtain the software environment information based on the extracted context.

13. The apparatus according to claim 11 or 12, wherein the searching module(1002) is configured to: search, based on the software environment information, a database comprising description information of a plurality of software packages, to obtain m initial software packages related to the vulnerability, wherein m is an integer greater than n; and select n initial software packages from the m initial software packages based on the software environment information as the n candidate software packages.

14. The apparatus according to claim 13, wherein the searching module(1002) is configured to: sort the m initial software packages based on software description information of each initial software package and the software environment information, to obtain a sorting result, wherein a ranking of any initial software package in the sorting result indicates a relevance degree between the any initial software package and the vulnerability; and select the n initial software packages from the m initial software packages based on the sorting result.

15. The apparatus according to claim 11, wherein the condition comprises one or more of the following:
a similarity between the software package and the candidate software package is higher than a first threshold that is set based on the experience; or
coordinates of the software package and coordinates of the candidate software package are continuous coordinates; or
the software package is located in the target software cluster.

## Patentansprüche

1. Schwachstellenanalyseverfahren, wobei das Verfahren umfasst:
Erhalten (201), durch eine Analysevorrichtung, von Softwareumgebungsinformationen einer Schwachstelle, wobei die Softwareumgebungsinformationen verwendet werden, um von der Schwachstelle betroffene Software zu beschreiben;
Erhalten (202), durch die Analysevorrichtung, von n Kandidatensoftwarepaketen durch Suchen basierend auf den Softwareumgebungsinformationen, wobei n eine ganze Zahl größer als oder gleich 1 ist;
Durchführen (203), durch die Analysevorrichtung, einer Erweiterung aus derselben Quelle an den n Kandidatensoftwarepaketen, um eine Vielzahl von empfohlenen Softwarepaketen zu erhalten, wobei eine Anzahl der Vielzahl von empfohlenen Softwarepaketen größer als n ist und das empfohlene Softwarepaket verwendet wird, um ein Annotationsobjekt bei einem Bestimmen eines Auswirkungsbereichs der Schwachstelle zu unterstützen; und
wobei das Durchführen der Erweiterung aus derselben Quelle an den n Kandidatensoftwarepaketen, um eine Vielzahl von empfohlenen Softwarepaketen zu erhalten, umfasst:
Clustern einer Vielzahl von Softwarepaketen in einer Datenbank basierend auf den Beschreibungsinformationen der Softwarepakete in der Datenbank, um mindestens einen Zielsoftwarecluster zu erhalten, wobei der Zielsoftwarecluster ein Softwarecluster, der das Kandidatensoftwarepaket umfasst, ist, und der Zielsoftwarecluster ferner ein Softwarepaket, das eine gleiche Quelle wie das Kandidatensoftwarepaket aufweist, umfasst; und
Verwenden eines Kandidatensoftwarepakets in dem mindestens einen Zielsoftwarecluster und eines Softwarepakets aus derselben Quelle, das eine Bedingung erfüllt, als die empfohlenen Softwarepakete.

2. Verfahren nach Anspruch 1, wobei das Erhalten von
Softwareumgebungsinformationen einer Schwachstelle umfasst:
Erhalten von Schwachstellenbeschreibungsinformationen der Schwachstelle; Identifizieren einer Softwareentität in den Schwachstellenbeschreibungsinformationen; und
Extrahieren eines Kontexts der Softwareentität aus den Schwachstellenbeschreibungsinformationen und Erhalten der Softwareumgebungsinformationen basierend auf dem extrahierten Kontext.

3. Verfahren nach Anspruch 1 oder 2, wobei das Erhalten von n Kandidatensoftwarepaketen durch Suchen basierend auf den Softwareumgebungsinformationen umfasst:
Durchsuchen, basierend auf den Softwareumgebungsinformationen, der Datenbank, die Beschreibungsinformationen einer Vielzahl von Softwarepaketen umfasst, um m anfängliche Softwarepakete, die sich auf die Schwachstelle beziehen, zu erhalten, wobei m eine ganze Zahl größer als n ist; und
Auswählen von n anfänglichen Softwarepaketen aus den m anfänglichen Softwarepaketen basierend auf den Softwareumgebungsinformationen als die n Kandidatensoftwarepakete.

4. Verfahren nach Anspruch 3, wobei das Auswählen von n anfänglichen Softwarepaketen aus den m anfänglichen Softwarepaketen basierend auf den Softwareumgebungsinformationen umfasst:
Sortieren der m anfänglichen Softwarepakete basierend auf Softwarebeschreibungsinformationen jedes anfänglichen Softwarepakets und den Softwareumgebungsinformationen, um ein Sortierergebnis zu erhalten, wobei eine Rangfolge eines beliebigen anfänglichen Softwarepakets in dem Sortierergebnis einen Relevanzgrad zwischen dem beliebigen anfänglichen Softwarepaket und der Schwachstelle angibt; und
Auswählen der n anfänglichen Softwarepakete aus den m anfänglichen Softwarepaketen basierend auf dem Sortierergebnis.

5. Verfahren nach Anspruch 3 oder 4, wobei das Verfahren ferner umfasst:
Erhalten eines Softwarepaketfiltermodells; und
das Auswählen von n anfänglichen Softwarepaketen aus den m anfänglichen Softwarepaketen basierend auf den Softwareumgebungsinformationen umfasst:
Aufrufen des Softwarepaketfiltermodells, um die n anfänglichen Softwarepakete aus den m anfänglichen Softwarepaketen basierend auf den Softwareumgebungsinformationen auszuwählen.

6. Verfahren nach Anspruch 1, wobei die Bedingung eines oder mehrere der Folgenden umfasst:
eine Ähnlichkeit zwischen dem Softwarepaket und dem Kandidatensoftwarepaket ist größer als ein erster Schwellenwert, der basierend auf der Erfahrung festgelegt wird; oder
Koordinaten des Softwarepakets und Koordinaten des Kandidatensoftwarepakets sind kontinuierliche Koordinaten; oder
das Softwarepaket befindet sich in dem Zielsoftwarecluster.

7. Verfahren nach Anspruch 1, wobei das Clustern der Vielzahl von Softwarepaketen basierend auf den Beschreibungsinformationen der Softwarepakete in der Datenbank, um mindestens einen Zielsoftwarecluster zu erhalten, umfasst:
Erhalten eines Beschreibungsvektors jedes Softwarepakets in der Vielzahl von Softwarepaketen basierend auf den Beschreibungsinformationen der Softwarepakete in der Datenbank;
Clustern der Vielzahl von Softwarepaketen basierend auf dem Beschreibungsvektor jedes Softwarepakets, um eine Vielzahl von anfänglichen Softwareclustern zu erhalten;
Berechnen einer Codeähnlichkeit zwischen Softwarepaketen, die in jedem anfänglichen Softwarecluster der Vielzahl von anfänglichen Softwareclustern umfasst sind;
Filtern, basierend auf einer Codeähnlichkeit zwischen in einem beliebigen anfänglichen Softwarecluster umfassten Softwarepaketen, der in dem beliebigen anfänglichen Softwarecluster umfassten Softwarepakete, um einen Kandidatensoftwarecluster zu erhalten; und
Verwenden eines Kandidatensoftwareclusters, das das Kandidatensoftwarepaket umfasst, als das Zielsoftwarecluster.

8. Verfahren nach einem der Ansprüche 1 bis 7, wobei nach dem Erhalten einer Vielzahl von empfohlenen Softwarepaketen das Verfahren ferner umfasst:
Bestimmen, aus der Vielzahl von empfohlenen Softwarepaketen, eines Zielsoftwarepakets, das mit dem Annotationsobjekt übereinstimmt; und
Bestimmen einer Softwareversion, die von der Schwachstelle in dem Zielsoftwarepaket betroffen ist.

9. Verfahren nach Anspruch 8, wobei das Bestimmen eines mit dem Annotationsobjekt übereinstimmenden Zielsoftwarepakets aus der Vielzahl von empfohlenen Softwarepaketen umfasst:
Senden von Informationen über die Vielzahl von empfohlenen Softwarepaketen an ein Endgerät, wobei das Endgerät konfiguriert ist zum: Anzeigen der Informationen über die Vielzahl von empfohlenen Softwarepaketen, und Zurückgeben von Informationen über das Zielsoftwarepaket, das mit dem Annotationsobjekt übereinstimmt; und
Empfangen der Informationen, die das Zielsoftwarepaket betreffen und die durch das Endgerät gesendet werden.

10. Verfahren nach Anspruch 9, wobei das Bestimmen einer von der Schwachstelle in dem Zielsoftwarepaket betroffenen Softwareversion umfasst:
Erhalten, basierend auf den Informationen über das Zielsoftwarepaket, von Versionsinformationen des Zielsoftwarepakets aus einer Informationsbasis, die Versionsinformationen der Vielzahl von Softwarepaketen umfasst; und
Senden der Versionsinformationen des Zielsoftwarepakets an das Endgerät und Empfangen der durch das Endgerät zurückgegebenen Softwareversion.

11. Schwachstellenanalyseeinrichtung, wobei die Einrichtung in einer Analysevorrichtung verwendet wird und die Einrichtung umfasst:
ein Erhaltemodul (1001), das konfiguriert ist, um Softwareumgebungsinformationen einer Schwachstelle zu erfassen, wobei die Softwareumgebungsinformationen verwendet werden, um von der Schwachstelle betroffene Software zu beschreiben;
ein Suchmodul (1002), das konfiguriert ist, um n Kandidatensoftwarepakete durch Suchen basierend auf den Softwareumgebungsinformationen zu erhalten, wobei n eine ganze Zahl größer als oder gleich 1 ist;
ein Erweiterungsmodul (1003), das konfiguriert ist, um die Erweiterung aus derselben Quelle an den n Kandidatensoftwarepaketen durchzuführen, um eine Vielzahl von empfohlenen Softwarepaketen zu erhalten, wobei eine Anzahl der Vielzahl von empfohlenen Softwarepaketen größer als n ist und das empfohlene Softwarepaket verwendet wird, um ein Annotationsobjekt bei dem Bestimmen eines Auswirkungsbereichs der Schwachstelle zu unterstützen;
das Erweiterungsmodul (1003), das konfiguriert ist, um eine Vielzahl von Softwarepaketen in einer Datenbank basierend auf Beschreibungsinformationen von Softwarepaketen in der Datenbank zu clustern, um mindestens einen Zielsoftwarecluster zu erhalten, wobei der Zielsoftwarecluster ein Softwarecluster ist,
der das Kandidatensoftwarepaket umfasst, und der Zielsoftwarecluster ferner ein Softwarepaket, das eine gleiche Quelle wie das Kandidatensoftwarepaket aufweist,
umfasst; und Verwenden eines Kandidatensoftwarepakets in dem mindestens einen Zielsoftwarecluster und eines Softwarepakets aus derselben Quelle, das eine Bedingung erfüllt, als die empfohlenen Softwarepakete.

12. Vorrichtung nach Anspruch 11, wobei das Erhaltemodul (1001) konfiguriert ist zum:
Erhalten von Schwachstellenbeschreibungsinformationen der Schwachstelle;
Identifizieren einer Softwareentität in der Schwachstellenbeschreibungsinformation;
und Extrahieren eines Kontexts der Softwareentität aus den Schwachstellenbeschreibungsinformationen und Erhalten der Softwareumgebungsinformationen basierend auf dem extrahierten Kontext.

13. Vorrichtung nach Anspruch 11 oder 12, wobei das Suchmodul (1002) konfiguriert ist zum: Durchsuchen, basierend auf den Softwareumgebungsinformationen, einer Datenbank, die Beschreibungsinformationen einer Vielzahl von Softwarepaketen umfasst, um m anfängliche Softwarepakete, die sich auf die Schwachstelle beziehen, zu erhalten, wobei m eine ganze Zahl größer als n ist; und Auswählen von n anfänglichen Softwarepaketen aus den m anfänglichen Softwarepaketen basierend auf den Softwareumgebungsinformationen als die n Kandidatensoftwarepakete.

14. Vorrichtung nach Anspruch 13, wobei das Suchmodul (1002) konfiguriert ist zum: Sortieren der m anfänglichen Softwarepakete basierend auf Softwarebeschreibungsinformationen jedes anfänglichen Softwarepakets und den Softwareumgebungsinformationen, um ein Sortierergebnis zu erhalten, wobei eine Rangfolge eines beliebigen anfänglichen Softwarepakets in dem Sortierergebnis einen Relevanzgrad zwischen dem beliebigen anfänglichen Softwarepaket und der Schwachstelle angibt; und Auswählen der n anfänglichen Softwarepakete aus den m anfänglichen Softwarepaketen basierend auf dem Sortierergebnis.

15. Einrichtung nach Anspruch 11, wobei die Bedingung eines oder mehrere der Folgenden umfasst:
eine Ähnlichkeit zwischen dem Softwarepaket und dem Kandidatensoftwarepaket ist größer als ein erster Schwellenwert, der basierend auf der Erfahrung festgelegt wird; oder
Koordinaten des Softwarepakets und Koordinaten des Kandidatensoftwarepakets sind kontinuierliche Koordinaten; oder
das Softwarepaket befindet sich in dem Zielsoftwarecluster.

## Revendications

1. Procédé d'analyse de vulnérabilité, dans lequel le procédé comprend :
l'obtention (201), par un dispositif d'analyse, d'informations d'environnement logiciel d'une vulnérabilité, dans lequel les informations d'environnement logiciel sont utilisées pour décrire un logiciel affecté par la vulnérabilité ;
l'obtention (202), par le dispositif d'analyse, de n progiciels candidats par le biais d'une recherche basée sur les informations d'environnement logiciel, dans lequel n est un nombre entier supérieur ou égal à 1 ;
la réalisation (203), par le dispositif d'analyse, d'une extension de même source sur les n progiciels candidats pour obtenir une pluralité de progiciels recommandés,
dans lequel une quantité de la pluralité de progiciels recommandés est supérieure à n, et le progiciel recommandé est utilisé pour aider un objet d'annotation à déterminer une plage d'impact de la vulnérabilité ; et
dans lequel la réalisation d'une extension de même source sur les n progiciels candidats pour obtenir une pluralité de progiciels recommandés comprend :
le regroupement d'une pluralité de progiciels dans une base de données sur la base des informations de description des progiciels dans la base de données, afin d'obtenir au moins une grappe logicielle cible, dans lequel la grappe logicielle cible est une grappe logicielle comprenant le progiciel candidat, et la grappe logicielle cible comprend en outre un progiciel qui a une même source que le progiciel candidat ; et
l'utilisation d'un progiciel candidat dans l'au moins une grappe logicielle cible et d'un progiciel de même source qui remplit une condition en tant que progiciel recommandé.

2. Procédé selon la revendication 1, dans lequel l'obtention d'informations d'environnement logiciel d'une vulnérabilité comprend :
l'obtention d'informations de description de vulnérabilité de la vulnérabilité ;
l'identification d'une entité logicielle dans les informations de description de vulnérabilité ; et
l'extraction d'un contexte de l'entité logicielle à partir des informations de description de vulnérabilité, et l'obtention des informations d'environnement logiciel sur la base du contexte extrait.

3. Procédé selon la revendication 1 ou 2, dans lequel l'obtention de n progiciels candidats par l'intermédiaire d'une recherche sur la base des informations d'environnement logiciel comprend :
la recherche, sur la base des informations d'environnement logiciel, dans la base de données comprenant des informations de description d'une pluralité de progiciels,
afin d'obtenir m progiciels initiaux liés à la vulnérabilité, dans lequel m est un nombre entier supérieur à n ; et
la sélection de n progiciels initiaux parmi les m progiciels initiaux sur la base des informations d'environnement logiciel en guise de n progiciels candidats.

4. Procédé selon la revendication 3, dans lequel la sélection de n progiciels initiaux parmi les m progiciels initiaux sur la base des informations d'environnement logiciel comprend :
le tri des m progiciels initiaux sur la base d'informations de description de logiciel de chaque progiciel initial et des informations d'environnement logiciel, afin d'obtenir un résultat de tri, dans lequel un classement de l'un quelconque progiciel initial dans le résultat de tri indique un degré de pertinence entre l'un quelconque progiciel initial et la vulnérabilité ; et
la sélection des n progiciels initiaux parmi les m progiciels initiaux sur la base du résultat de tri.

5. Procédé selon la revendication 3 ou 4, dans lequel le procédé comprend en outre :
l'obtention d'un modèle de filtrage de progiciel ; et
la sélection de n progiciels initiaux parmi les m progiciels initiaux sur la base des informations d'environnement logiciel comprend :
l'invocation du modèle de filtrage de progiciels pour sélectionner les n progiciels initiaux parmi les m progiciels initiaux sur la base des informations d'environnement logiciel.

6. Procédé selon la revendication 1, dans lequel la condition comprend l'un ou plusieurs éléments parmi les suivants :
une similitude entre le progiciel et le progiciel candidat est supérieure à un premier seuil qui est fixé sur la base de l'expérience ; ou
des coordonnées du progiciel et des coordonnées du progiciel candidat sont des coordonnées continues ; ou
le progiciel est situé dans la grappe logicielle cible.

7. Procédé selon la revendication 1, dans lequel le regroupement de la pluralité de progiciels sur la base des informations de description des progiciels dans la base de données, afin d'obtenir au moins une grappe logicielle cible comprend :
l'obtention d'un vecteur de description de chaque progiciel dans la pluralité de progiciels sur la base des informations de description des progiciels dans la base de données ;
le regroupement de la pluralité de progiciels sur la base du vecteur de description de chaque progiciel afin d'obtenir une pluralité de grappes logicielles initiales ;
le calcul d'une similitude de code entre des progiciels compris dans chaque grappe logicielle initiale dans la pluralité de grappes logicielles initiales ;
le filtrage, sur la base d'une similitude de code entre des progiciels compris dans une quelconque grappe logicielle initiale, des progiciels compris dans l'une quelconque grappe logicielle initiale, afin d'obtenir une grappe logicielle candidate ; et
l'utilisation d'une grappe logicielle candidate comprenant le progiciel candidat en tant que grappe logicielle cible.

8. Procédé selon l'une quelconque des revendications 1 à 7, dans lequel, après l'obtention d'une pluralité de progiciels recommandés, le procédé comprend en outre :
la détermination, parmi la pluralité de progiciels recommandés, d'un progiciel cible correspondant à l'objet d'annotation ; et
la détermination d'une version de logiciel affectée par la vulnérabilité dans le progiciel cible.

9. Procédé selon la revendication 8, dans lequel la détermination, parmi la pluralité de progiciels recommandés, d'un progiciel cible correspondant à l'objet d'annotation comprend :
l'envoi d'informations sur la pluralité de progiciels recommandés à un terminal, dans lequel le terminal est configuré pour : afficher les informations sur la pluralité de progiciels recommandés, et renvoyer des informations sur le progiciel cible correspondant à l'objet d'annotation ; et
la réception des informations qui concernent le progiciel cible et qui sont envoyées par le terminal.

10. Procédé selon la revendication 9, dans lequel la détermination d'une version de logiciel affectée par la vulnérabilité dans le progiciel cible comprend :
l'obtention, sur la base des informations concernant le progiciel cible, d'informations de version du progiciel cible à partir d'une base d'informations comprenant des informations de version de la pluralité de progiciels ; et
l'envoi des informations de version du progiciel cible au terminal, et la réception de la version de logiciel renvoyée par le terminal.

11. Appareil d'analyse de vulnérabilité, dans lequel l'appareil est utilisé dans un dispositif d'analyse, et l'appareil comprend :
un module d'obtention (1001), configuré pour obtenir des informations d'environnement logiciel d'une vulnérabilité, dans lequel les informations d'environnement logiciel sont utilisées pour décrire un logiciel affecté par la vulnérabilité ;
un module de recherche (1002), configuré pour obtenir n progiciels candidats par le biais d'une recherche sur la base des informations d'environnement logiciel, dans lequel n est un nombre entier supérieur ou égal à 1 ;
un module d'extension (1003), configuré pour réaliser une extension de même source sur les n progiciels candidats afin d'obtenir une pluralité de progiciels recommandés, dans lequel une quantité de la pluralité de progiciels recommandés est supérieure à n, et le progiciel recommandé est utilisé pour aider un objet d'annotation à déterminer une plage d'impact de la vulnérabilité ;
le module d'extension (1003), configuré pour regrouper une pluralité de progiciels dans une base de données sur la base d'informations de description de progiciels dans la base de données, afin d'obtenir au moins une grappe logicielle cible, dans lequel la grappe logicielle cible est une grappe logicielle comprenant le progiciel candidat, et la grappe logicielle cible comprend en outre un progiciel qui a une même source que le progiciel candidat ; et l'utilisation d'un progiciel candidat dans l'au moins une grappe logicielle cible et d'un progiciel de même source qui remplit une condition en tant que progiciels recommandés.

12. Appareil selon la revendication 11, dans lequel le module d'obtention (1001) est configuré pour : obtenir des informations de description de vulnérabilité de la vulnérabilité ; identifier une entité logicielle dans les informations de description de vulnérabilité ; et extraire un contexte de l'entité logicielle à partir des informations de description de vulnérabilité, et obtenir les informations d'environnement logiciel sur la base du contexte extrait.

13. Appareil selon la revendication 11 ou 12, dans lequel le module de recherche (1002) est configuré pour : effectuer, sur la base des informations d'environnement logiciel, une recherche dans une base de données comprenant des informations de description d'une pluralité de progiciels, afin d'obtenir m progiciels initiaux liés à la vulnérabilité, dans lequel m est un nombre entier supérieur à n ; et sélectionner n progiciels initiaux parmi les m progiciels initiaux sur la base des informations d'environnement logiciel en tant que n progiciels candidats.

14. Appareil selon la revendication 13, dans lequel le module de recherche (1002) est configuré pour : trier les m progiciels initiaux sur la base d'informations de description de logiciel de chaque progiciel initial et des informations d'environnement logiciel, afin d'obtenir un résultat de tri, dans lequel un classement de l'un quelconque progiciel initial dans le résultat de tri indique un degré de pertinence entre l'un quelconque progiciel initial et la vulnérabilité ; et sélectionner les n progiciels initiaux parmi les m progiciels initiaux sur la base du résultat de tri.

15. Appareil selon la revendication 11, dans lequel la condition comprend l'un ou plusieurs éléments parmi les suivants :
une similitude entre le progiciel et le progiciel candidat est supérieure à un premier seuil qui est fixé sur la base de l'expérience ; ou
des coordonnées du progiciel et des coordonnées du progiciel candidat sont des coordonnées continues ; ou
le progiciel est situé dans la grappe logicielle cible.
